# FASCICULE DE BREVET EUROPEEN

(11) **EP 1 588 154 B1**
(45) Date de publication et mention de la délivrance du brevet: **07.12.2011**
(21) Numéro de dépôt: 04700262.1
(22) Date de dépôt: 06.01.2004
(51) Int. Cl.: G01N 27/04, G01M 3/18

(54) **DISPOSITIF DE SURVEILLANCE DE L' INTEGRITE DE CONTACT D' UN JOINT**
VORRICHTUNG ZUR ÜBERWACHUNG DER DICHTUNGSINTEGRITÄT
DEVICE FOR MONITORING THE CONTACT INTEGRITY OF A JOINT

(30) Priorité: 29.01.2003 FR 0300955
(43) Date de publication de la demande: 26.10.2005
(73) Titulaire: ISITIX, 22700 Perros-Guirec (FR)
(72) Inventeur: DAUTREY, Mikael, F-22700 Perros-Guirec (FR)
(86) Numéro de dépôt international: PCT/FR2004/000008
(87) Numéro de publication internationale: WO 2004/079353

(56) Documents cités:
- GB-A- 1 535 047
- US-A- 4 202 201
- US-A- 4 446 424
- US-A- 5 404 747
- US-A- 6 032 542

## Description

### Domaine technique :

La présente invention concerne un dispositif pour mesurer de manière continue la modification du contact entre deux surfaces curvilignes en contact à partir d'une mesure de résistance.

On entend par curviligne une surface construite à partir d'une courbe directrice et des sections de cette courbe directrice. Une section est une ligne rectiligne ou non définie pour chaque point de la courbe directrice. Les sections forment un ensemble de lignes rectilignes ou non qui coupent la courbe directrice mais ne se coupent pas entre elles. La courbe directrice et l'ensemble des sections définissent une surface. La surface ainsi définie peut être plane ou non. Nous appelons bords de la surface de contact l'ensemble des points extrémités des sections. La surface curviligne possède donc deux bords. Elles possèdent également deux extrémités, confondues ou non, qui sont les deux sections situées aux extémités de la courbe directrice et que nous appelons extrémités de la surface. Nous appelons joint une surface de contact curviligne entre deux éléments.

### Technique antérieure :

La détection de fuite ou d'intrusion de matière est traditionnellement réalisée par des capteurs externes qui détectent la présence anormale de la matière suite à son passage entre deux éléments en contact réalisant normalement une frontière étanche entre deux zones. Ces capteurs peuvent être des capteurs mesurant la pression d'un fluide, ou des capteurs permettant la détection d'un composé chimique, ou des capteurs permettant la détection de la présence de matière ou tout autre type de capteurs en fonction de l'application. La dégradation d'étanchéité est alors détectée lorsque le passage de matière entre les deux zones a eu lieu, c'est à dire après rupture d'étanchéité, la rupture d'étanchéité pouvant être définie comme une rupture d'intégrité de la zone de contact définissant un chemin entre les deux bords de la surface. L'étendue de la dégradation est alors estimée à partir de la quantité de matière qui est passée d'une zone à l'autre par ce chemin.

Le contrôle d'étanchéité des portes et trappes étanches est également le plus souvent réalisé par des mesures de différence de pression, qui ne permettent pas de contrôler le positionnement correct du joint d'étanchéité de la porte ou trappe par exemple dans le brevet US 4,202,201 du 13 mai 1980 ou 5,404,747 du 11 avril 1995.

Un autre procédé de détection de fuite consiste à mesurer la pression sur la membrane d'étanchéité. La fuite est alors détectée par une baisse de pression sur la surface de la membrane suite à la transition d'un régime de pression hydrostatique à un régime de pression dynamique. Ce procédé ne permet pas non plus de détecter la dégradation de la surface avant que la fuite ne survienne. Un système de mesure de pression possible pour cette application est proposé dans le brevet US 4, 446, 424 du 1^{er} mai 1984.

Un autre procédé proposé dans le brevet GB 1 535 047 A consiste à détecter la fuite par détection de l'établissement d'un courant électrique suite au passage d'un liquide conducteur entre les deux surfaces en contact. Ce procédé, du type tout ou rien, ne permet pas de mesurer l'étendue de la dégradation d'étanchéité. Il ne s'applique de plus qu'à l'intrusion d'une matière conductrice, entre les deux surfaces en contact. L'altération du joint par une matière isolant ne sera pas détectée.

GB1,535,047 divulgue un dispositif de contrôle d'intégrité de contact entre deux surfaces curvilignes par la mesure d'un courant électrique suite au passage d'un liquide conducteur entre les deux surfaces en contact.

### Exposé de l'invention :

La présente invention permet de remédier à ces inconvénients, en apportant un contrôle par mesure de résistance de l'intégrité du contact entre deux éléments en contact selon une surface curviligne. Elle permet ainsi de détecter et de mesurer le décollement partiel du contact en n'importe quel point de la surface de contact avant la fuite ou l'intrusion, et donc de prévoir et prévenir cet événement.

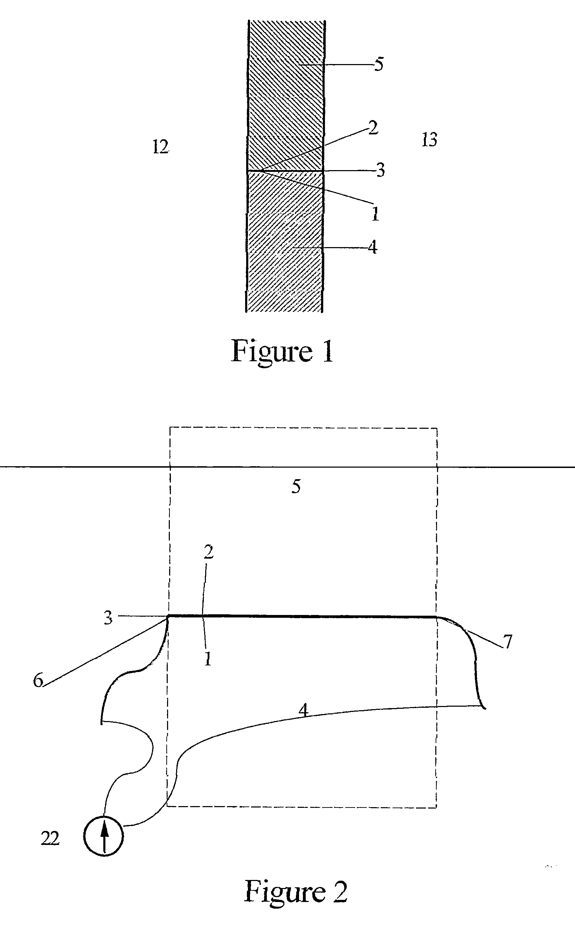

Chaque surface de contact (1) et (2)(fig 2) est pavée par des motifs conducteurs séparés entre eux par des zones isolantes. Les motifs conducteurs peuvent être des motifs de surface ou des motifs d'une certaine épaisseur incorporés dans le matériau formant le joint et affleurant sa surface.

La présente invention n'impose aucune restriction à la distribution de la matière constituant le motif conducteur dans le volume des pièces en contact. Seule la surface affleurant la zone de contact est définie.

Par conduction, on entend conduction au sens large, c'est à dire réponse en intensité par rapport à une mise sous tension, la tension étant continue ou variable au cours du temps.

La zone isolante est une zone dont la conductivité peut prendre une valeur déterminée comprise entre une conductivité nulle ou quasi-nulle (proche de l'isolant parfait) à une conductivité faible relativement à celle des motifs conducteurs.

Les caractéristiques électriques des zones conductrices et isolantes ne sont pas nécessairement homogènes tant dans le volume que sur la surface de contact.

La succession des motifs conducteurs et des zones isolantes peut ainsi être obtenue par variation continue des caractéristiques électriques d'un matériau.

On définit une ligne conductrice comme une ligne joignant les deux extrémités de la surface curviligne et homotope à sa ligne directrice. Le pavage de chaque surface (1) et (2) est conçu de manière à ce que leur superposition forme une surface conductrice ininterrompue selon une ligne conductrice de la surface curviligne, c'est à dire qu'il soit possible de tracer entre les deux extrémités de la surface curviligne une ligne conductrice contenue dans la surface formée par la réunion des motifs conducteurs des surfaces (1) et (2). Nous appelons cette ligne, ligne de conduction des motifs.

Les motifs sont ainsi réalisés de sorte que lors de la mise en contact des deux surfaces chaque motif conducteur de la surface (1) est en contact avec au moins deux motifs conducteurs consécutifs selon la ligne de conduction de la surface (2), et que chaque motif conducteur de la surface (2) est en contact avec au moins deux motifs conducteurs consécutifs de la surface (1). La mise en contact des deux surfaces a pour conséquence la mise en contact des motifs conducteurs et la création d'un élément conducteur selon la ligne de conduction des motifs entre les deux extrémités de la surface curviligne. La disposition des motifs conducteurs est telle que l'élément conducteur ainsi constitué est un dipôle résistif constitué des résistances des différents motifs mis en série. Nous appelons surface de conduction la surface définie par l'intersection des surfaces conductrices des surface (1) et (2) et par surface isolante la surface complémentaire de la surface conductrice dans la surface de contact curviligne.

Les motifs conducteurs sont inclus dans les pièces en contact, (4) et (5) et suivent les déformations de ces pièces.

Dans un mode particulier de réalisation, il peut s'agir de zones de conductivité forte d'un joint constitué d'un seul matériau non homogène dont la résistivité évolue de manière continue selon la ligne de conduction ou selon la ligne de conduction et en fonction de la distance à la ligne de conduction pour un point donné, y compris dans le volume du joint.

Dans un mode particulier de réalisation, il peut s'agir de zone de conductivité forte d'un joint constitué de plusieurs matériaux homogènes ou non, des discontinuités de conductivité existant à la frontière entre ces matériaux.

Un dispositif de mesure du courant et de la tension entre les deux extrémités du conducteur permet de mesurer la qualité du contact entre les deux surfaces et son évolution dans le temps. En cas de décollement affectant la surface conductrice, une modification du courant et de la tension est mesurée entre les deux extrémités. En cas de fuite ou intrusion sur un chemin joignant les deux bords de la surface de contact à travers la surface de conduction, un accroissement de la résistance voire une rupture de la conduction entre les deux extrémités est détectée. Les motifs conducteurs étant en série sur la ligne de conduction, la variation de résistance du conducteur de bout en bout est égale à la variation de résistance de l'un des motifs lors d'une évolution du contact entre les deux surfaces. Le dispositif fonctionne également si chaque motif est en contact avec plus de deux motifs de la surface opposée. Dans ce cas, la résistance de bout en bout est une composition de résistances en parallèle et en série. Dans tous les cas, l'évolution de la résistance traduit l'évolution locale du contact entre les deux pièces.

Selon des modes particuliers de réalisation,
- il est possible de définir plusieurs lignes conductrices sur une même surface de contact. Cette configuration permet de réduire les risques de fuite à travers la zone isolante.
- Il est possible de positionner les deux points de mesure aux extrémités de la surface de contact soit sur le même élément, soit l'un sur l'un des éléments et l'autre sur l'autre
- Il est possible de multiplier les points de mesure. Cette configuration supprime les zones de non détection potentielles au voisinage des points de mesure. Elle permet également de localiser les évolutions de contact par secteur. Enfin, elle permet de corriger la dérive de la résistivité du matériau suite à des variations des caractéristiques physiques du milieu, telles que température, pression.
   Il est possible d'utiliser un signal variant dans le temps pour effectuer les mesures. Cette solution réduit les risques d'électrolyse
- Il est possible d'utiliser des signaux différents (fréquence ou temporel) pour effectuer des mesures entre les différents points de mesure,
- Il est possible d'employer différents types de motifs et en particulier des motifs permettant de garantir un contact en série partielle ou totale entre les motifs des deux surfaces quelle que soit la position respective des deux surfaces, ce qui évite d'avoir à caler les surfaces entre elles.
- Les motifs conducteurs peuvent être obtenus par métallisation des surfaces en contact, (1) et/ou (2).

Les motifs conducteurs peuvent être obtenus par inclusion de polymères conducteurs dans les pièces (4) et/ou (5) ou tout autre procédé permettant de faire varier les caractéristiques électriques du matériau constituant les deux pièces jointes.

La figure 1 présente la problématique générale de l'invention, sur une vue en coupe. Deux éléments (4) et (5) créent une frontière étanche entre deux zones (12) et (13). Ces deux éléments sont en contact par une surface de contact curviligne (3). Cette surface curviligne correspond à deux surfaces physiques, la surface (1) de contact de l'élément (4), et la surface (2) de contact de l'élément (5).

### Description sommaire des dessins :

La figure 2 présente le dispositif, vu de profil. (3) est la zone de contact entre les surfaces de contact (1) de la pièce (4) et (2) de la pièce (5). (3) est donc le joint entre les deux pièces, vu longitudinalement. (6) et (7) sont les deux points de mesure reliés à des conducteurs permettant de mesurer la résistance en série sur toute la longueur de la surface de contact. En fonction du montage choisi, (6) et (7) peuvent être raccordés à la même surface de contact, (1) par exemple, ou sur chacune des surfaces, (6) étant raccordé à 1 et (7) à (2).

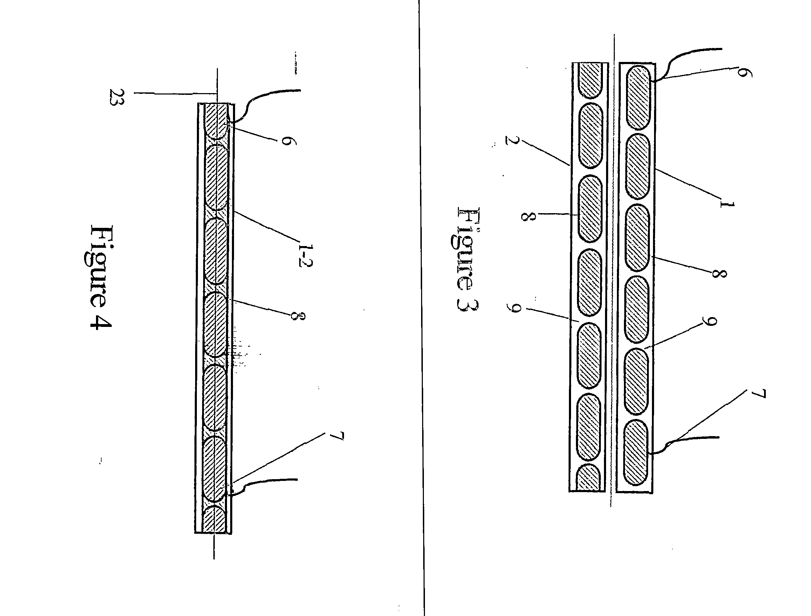

La figure 3 présente les deux surfaces de contact (1) et (2). (6) et (7) sont les deux points de mesure de la résistance. Ils ont ici été raccordés à la même surface de contact, (1). Les motifs (8) sont conducteurs, tandis que (9) est une zone isolante. La forme de la surface affleurante des motifs peut être différente en fonction du type d'application et de la précision sur la détection des décollements souhaitée.

La figure 4 représente la superposition des deux surfaces (1) et (2), vue de dessus. Le contact est établie entre l'ensemble des motifs conducteurs (8) des surfaces (1) et (2) créant un conducteur dont on mesure la résistance entre (6) et (7). (23) est ce que nous appelons la ligne de conduction, qui relient les points de conduction des motifs.

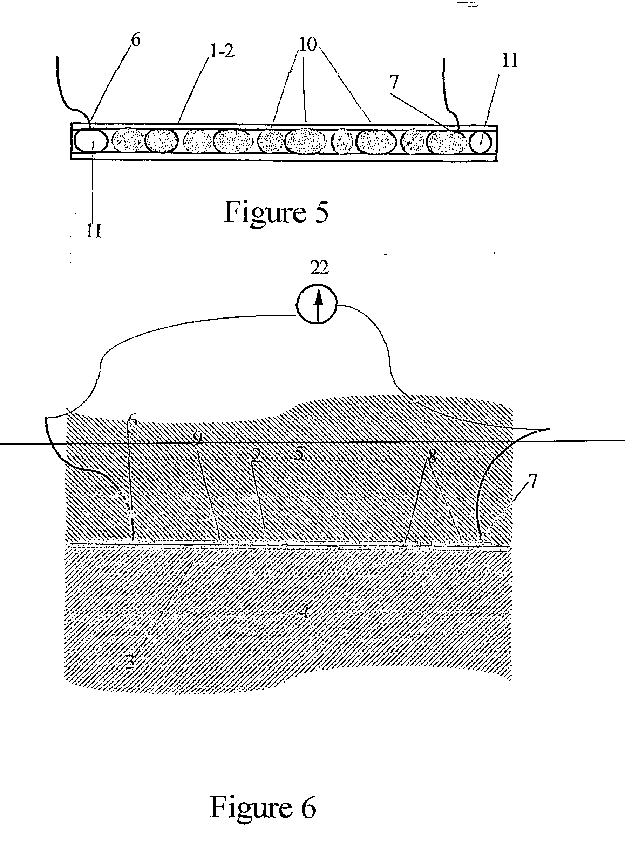

La figure 5 reproduit la figure 4. La surface de conduction, intersection des motifs de (1) et de (2) est représentée en grisé (10). On remarque que la zone (11), qui est un contact entre un motif de (1) et un motif de (2) n'est cependant pas incluse dans le conducteur entre(6) et (7), ce qui crée une zone d'ombre potentielle qui peut être réduite par des points de mesure multiples comme présenté plus loin.

La figure 6 présente une vue en coupe du dispositif
avec un contact uniforme des deux pièces (4) et (5) sur toute la surface. L'appareil (22) mesure la résistance entre les points (6) et (7).

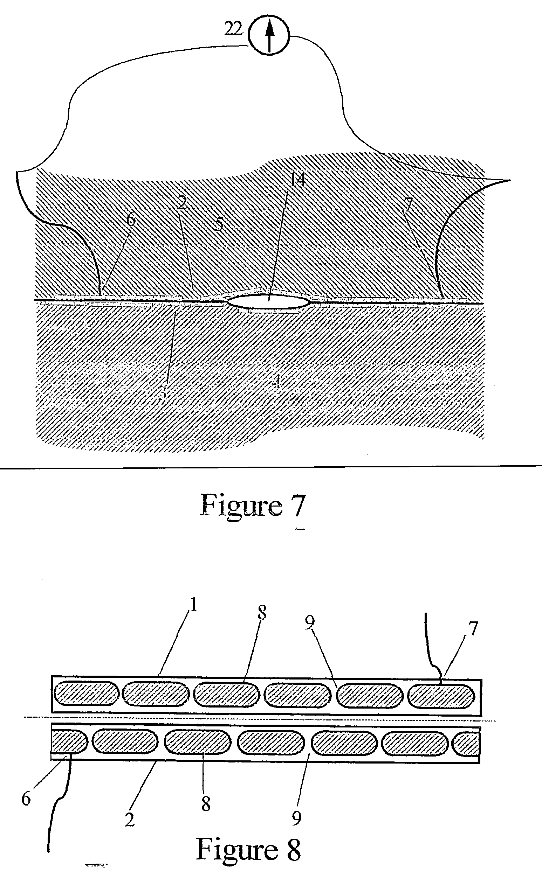

La figure 7 présente une vue en coupe après décollement de surface en (14). Le décollement de surface a provoqué une rupture de la conduction entre (6) et (7).

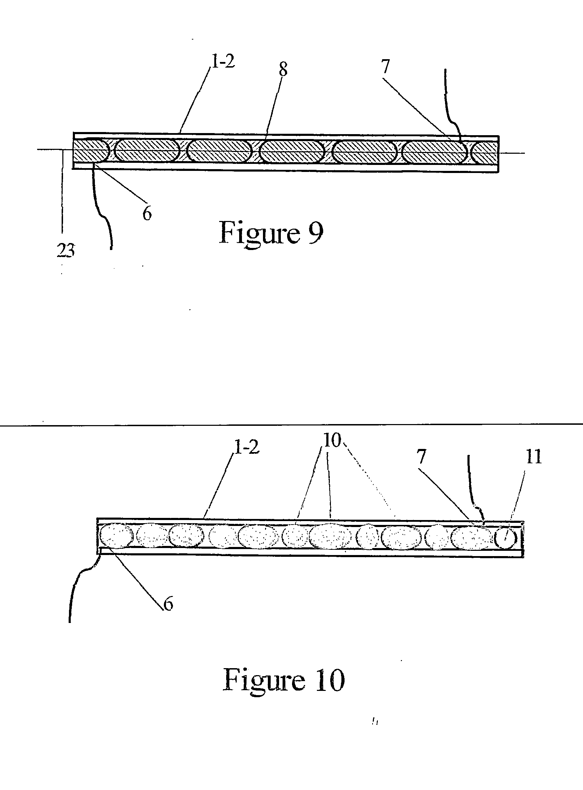

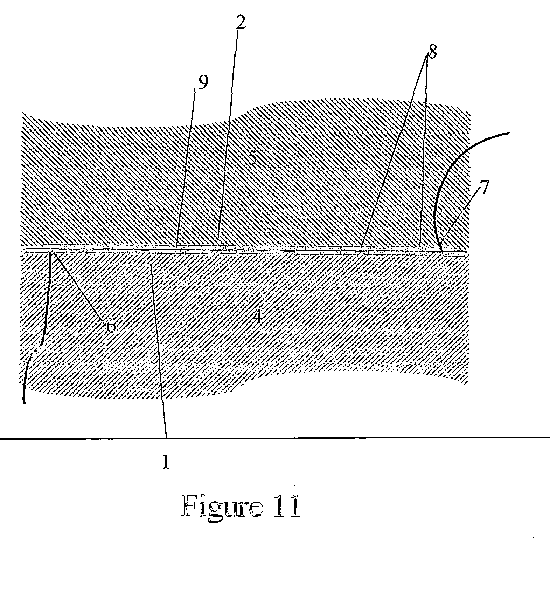

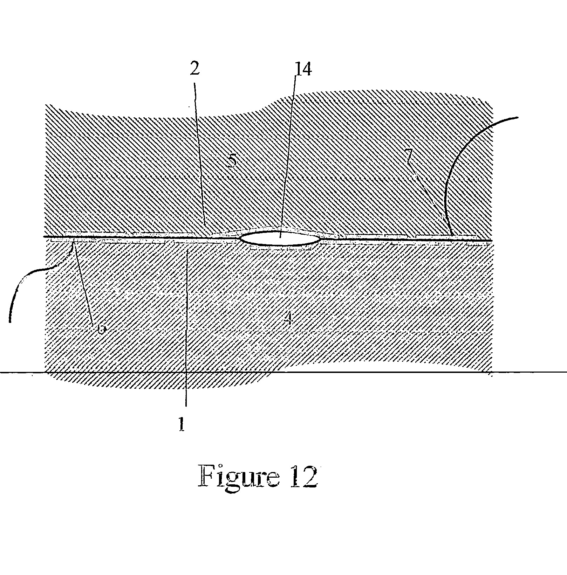

Les figures 8, 9, 10, 11 et 12 présentent les mêmes situations, mais dans le cas où les deux points de mesure ne sont pas sur la même surface. Le point de mesure (6) est sur la surface (1) et le point de mesure (7) sur la surface (2).

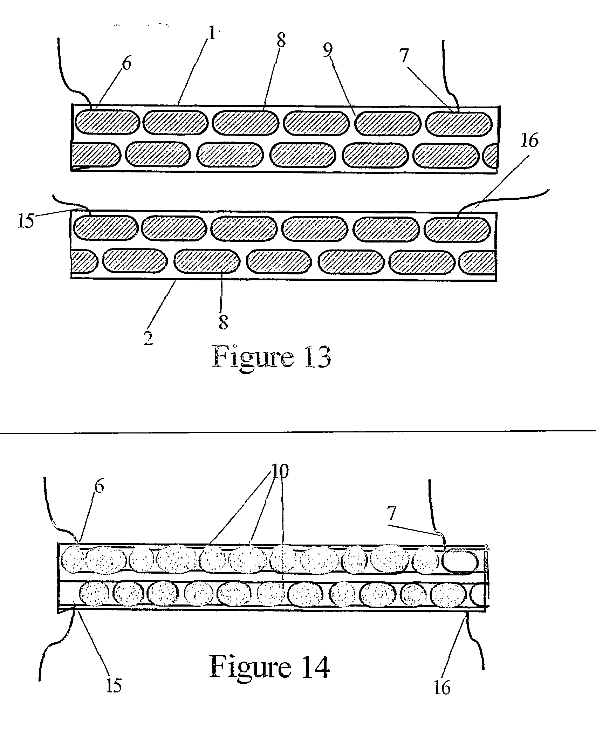

La figure 13 présente deux lignes de conduction avec des motifs décalés entre les deux lignes, ce qui accroît la sensibilité du dispositif. Les points de mesure (15) et(16) de la deuxième ligne ont été disposés sur l'autre surface de contact. Il est possible de les disposer indifféremment sur l'une ou l'autre des surfaces. Il est également possible de construire ainsi une nombre quelconques de lignes de conduction.

La figure 14 illustre la juxtaposition de motifs conducteurs correspondant à la figure 13. L'usage de plusieurs lignes de conduction permet de paver de manière optimale la surface de contacts par des motifs de conduction.

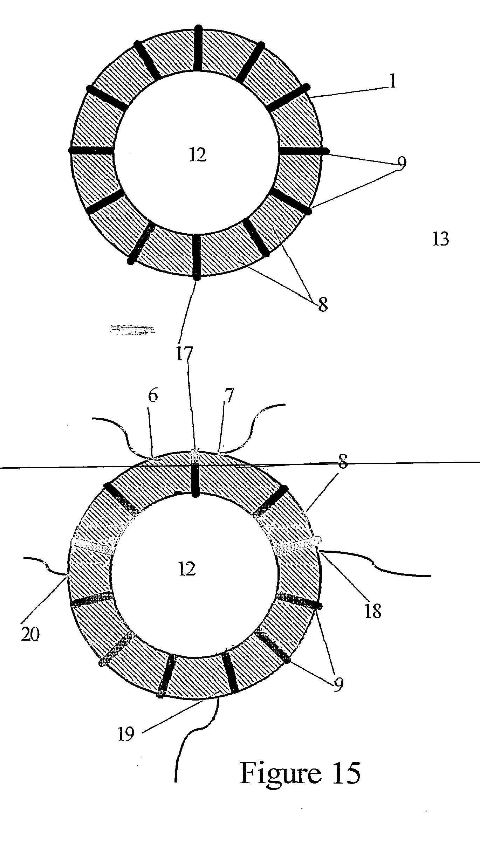

La figure 15 présente l'utilisation du dispositif dans le cas d'un joint circulaire, qui peut être, plus généralement, un joint en courbe fermée. Le conducteur est obtenu en faisant coïncider deux zones isolantes (17) des surfaces de contact (1) et (2) lors de la mise en contact de (1) et (2). Les autres zones isolantes de l'une ou l'autre des surfaces de contact sont chevauchées par un motif conducteur de l'autre surface.

La surface de contact est également raccordée à des points de mesure multiples, (6) et (7), qui sont à l'extrémité du conducteur, et (18), (19) et (20) qui sont répartis sur le conducteur. Cette configuration permet de mesurer la résistance entre les différents points de mesure pour localiser les zones de décollement éventuel du contact à partir de mesures successives entre les deux mêmes points.

Elle permet de corriger les évolutions de conduction des motifs en fonction des paramètres physiques extérieures, température, pression, en comparant l'évolution de la résistance sur chaque secteur. Elle permet également d'éviter les zones d'ombre au voisinage des points de mesure. Ainsi, une évolution du contact au voisinage de (18) sera mesurée entre (7) et (19).

Pour effectuer en permanence les mesures entre les couples de points de mesure, nous proposons de définir un signal électrique, alternatif de préférence pour limiter les risques d'électrolyse, différent (en fréquence ou en temps) pour chaque couple de points de mesure.

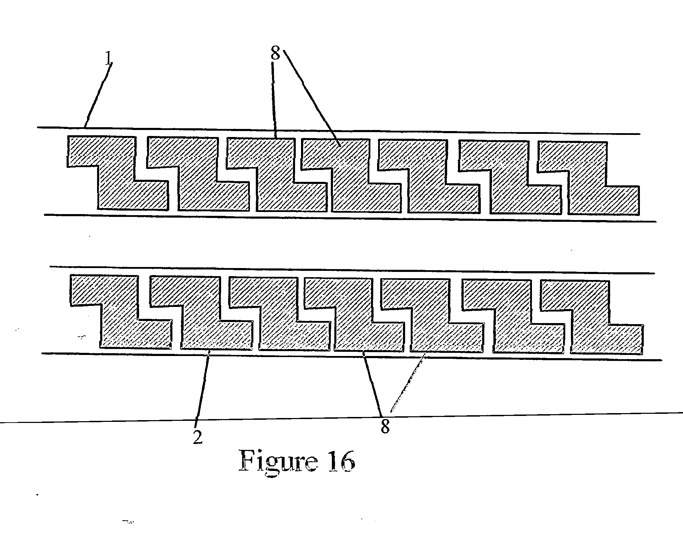

La figure 16 présente un motif particulier, identique pour les deux surfaces (1) et (2). Ce motif garantit pour chaque motif conducteur d'une des surfaces de contact un contact avec au moins deux motifs de la surface opposée, quelle que soit la position relative des deux surfaces de contact.

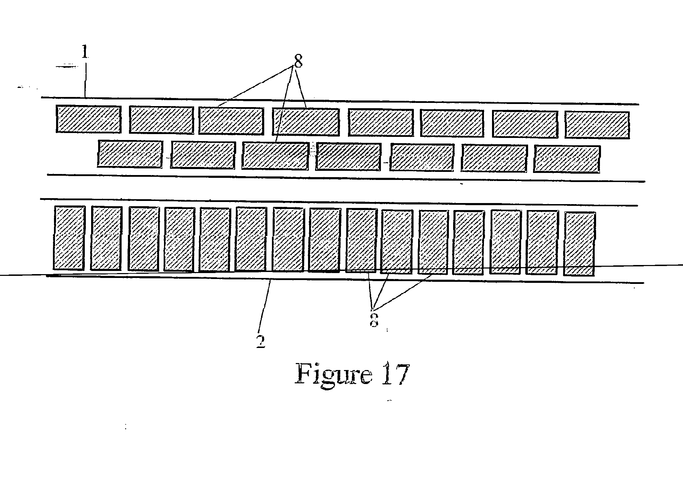

La figure 17 présente un autre ensemble de motifs, les motifs de la surface (1) étant orthogonaux aux motifs de la surface (2). Cette configuration présente les mêmes caractéristiques que celle de la figure 16, à savoir un contact de chaque motif avec au moins deux motifs de la surface opposée quelle que soit la position et une optimisation de la couverture de la surface de contact.

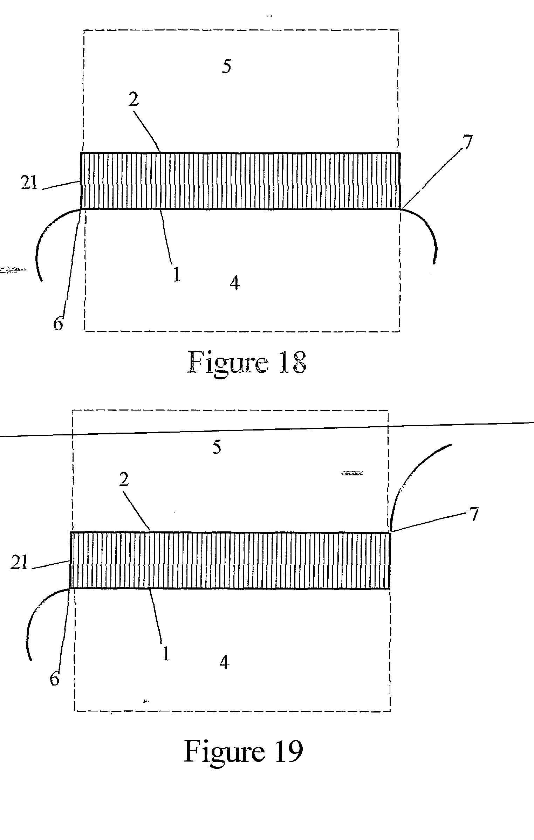

La figure 18 présente une variante du dispositif où les deux surfaces (1) et (2) ne sont plus en contact de matière mais sont reliées par un joint (21) constitué d'un élément conducteur selon des lignes parallèles ou non, fibres conductrices par exemple, et joignant les deux surfaces de contact (1) et (2). Ces lignes conductrices peuvent être orthogonales aux deux surfaces de contact, mettant ainsi en conduction des points qui seraient en contact de matière en l'absence de (21). Elles peuvent également être orientées différemment. Ce type de matériau peut être obtenu par inclusion de fibre conductrices dans un matériau isolant type caoutchouc ou tout autre procédé. Les points de mesure (6) et (7) peuvent être positionnés sur la même surface ici (1) ou sur l'une et l'autre des surfaces (voir figure 19).

## Revendications

1. Dispositif de contrôle d'intégrité de contact entre deux surfaces curvilignes **caractérisé par** la mesure d'une résistance sur des lignes de motifs conducteurs, les motifs conducteurs étant réparties selon une ligne de conduction sur chacune des surfaces en contact de manière à ce que la mise en contact des surfaces résulte en la création d'un conducteur le long de la ligne de conduction, avec mise en série partielle ou totale des résistances respectives des motifs.

2. Dispositif selon la revendication 1 **caractérisé par** plusieurs lignes de motifs indépendantes mises en place sur chacune des surfaces conductrices.

3. Dispositif selon les revendications 1 ou 2 **caractérisé par** un joint formant une courbe fermée, la ligne de conduction ouverte étant obtenue en faisant coïncider des zones isolantes des deux surfaces en contact.

4. Dispositifs selon la revendication 1 ou 2 ou 3 **caractérisé par** deux points de mesure situés aux extrémités de la ligne.

5. Dispositif selon la revendication 1 ou 2 ou 3 **caractérisé en ce que** chaque ligne de conduction comporte des points de mesure multiples répartis sur la ligne de conduction.

6. Dispositif selon la revendication 5 **caractérisé par** l'utilisation des signaux électriques différents (fréquence ou temporel) caractérisant chaque couple de points de mesure pour la mesure de résistance entre chaque couple de points de mesure.

7. Dispositifs selon l'une quelconque des revendications précédentes **caractérisé par** des points de mesure placés aux extrémités de l'une des surfaces en contact.

8. Dispositif selon l'une quelconque des revendications précédentes **caractérisé par** des points de mesure répartis arbitrairement entre les deux pièces en contact.

9. Dispositif selon l'une quelconque des revendications précédentes **caractérisé par** la présence d'un matériau conducteur selon des lignes parallèles entre elles et joignant les deux surfaces comportant les motifs conducteurs.

10. Dispositif selon l'une quelconque des revendications précédentes **caractérisé par** l'utilisation de motifs conducteurs obtenus par métallisation des surfaces de contact

11. Dispositif selon l'une quelconque des revendications précédentes, à l'exclusion de la revendication 10, **caractérisé par** l'utilisation de polymères conducteurs inclus dans les deux pièces en contact.

## Claims

1. A device for monitoring the contact integrity between two curvilinear surfaces, wherein said device measures electric resistance through lines of conductive patterns, the conductive patterns surfaces that show through being distributed according to a conduction line on each contact surface so that when the aforementioned surfaces are brought into contact, a conductor is built up according to the conduction line, by positioning respective resistances of the patterns in partial or total series.

2. The device as claimed in claim 1, wherein several independent lines of patterns are distributed on each conductive surface.

3. The device as claimed in anyone of claims 1 or 2, wherein the joint forms a closed curve, the open conduction line being obtained by matching the insulating zones of the two contact surfaces.

4. The device as claimed in anyone of claims 1 to 3, wherein two measuring points are positioned on the ends of the line.

5. The device as claimed in anyone of claims 1 to 3, wherein each conduction line comprises many measuring points distributed on the conduction line.

6. The device as claimed in claim 5, wherein various electric signals (frequencial or temporal) characteristic of each pair of measuring points are used to measure the resistance between each pair of measuring points.

7. The device as claimed in anyone of the preceding claims, wherein measuring points are positioned on the ends of one of the contact surfaces.

8. The device as claimed in anyone of the preceding claims, wherein measuring points are arbitrarily distributed on the contact parts.

9. The device as claimed in anyone of the preceding claims, wherein said device comprises a conductive material according to parallel lines joining the two surfaces with conductive patterns.

10. The device as claimed in anyone of the preceding claims, wherein the conductive patterns are obtained by metallization of the contact surfaces.

11. The device as claimed in anyone of the preceding claims except claim 10, wherein said device comprises conductive polymers embedded in the two contact parts.

## Patentansprüche

1. Vorrichtung zur Kontrolle der Kontaktintegrität zwischen zwei gekrümmten Flächen, **gekennzeichnet durch** das Messen eines Widerstandes auf Leitmotivlinien, wobei die Leitmotive entlang einer Leitungslinie auf jeder der in Kontakt befindlichen Flächen verteilt sind, so dass die Herstellung eines Kontakts der Flächen zur Schaffung eines Leiters entlang der Leitungslinie führt, wobei die jeweiligen Widerstände der Motive teilweise oder zur Gänze in Serie geschaltet werden.

2. Vorrichtung nach Anspruch 1, **gekennzeichnet durch** mehrere unabhängige Motivlinien, die auf jeder der leitenden Flächen angeordnet sind.

3. Vorrichtung nach den Ansprüchen 1 oder 2, **gekennzeichnet durch** eine Verbindung, die eine geschlossene Kurve bildet, wobei die offene Leitungslinie erhalten wird, indem die Isolierzonen der beiden in Kontakt befindlichen Flächen zusammengeführt werden.

4. Vorrichtung nach Anspruch 1, 2 oder 3, **gekennzeichnet durch** zwei Messpunkte, die sich an den Enden der Linie befinden.

5. Vorrichtung nach Anspruch 1, 2 oder 3, **dadurch gekennzeichnet, dass** jede Leitungslinie zahlreiche Messpunkte umfasst, die auf der Leitungslinie verteilt sind.

6. Vorrichtung nach Anspruch 5, **gekennzeichnet durch** die Verwendung der unterschiedlichen elektrischen Signale (Frequenz- oder Zeit-), die jedes Messpunktepaar zur Messung des Widerstandes zwischen jedem Messpunktepaar kennzeichnen.

7. Vorrichtung nach einem der vorhergehenden Ansprüche, **gekennzeichnet durch** Messpunkte, die an den Enden einer der Kontaktflächen angeordnet sind.

8. Vorrichtung nach einem der vorhergehenden Ansprüche, **gekennzeichnet durch** Messpunkte, die willkürlich zwischen den in Kontakt befindlichen Stücken verteilt sind.

9. Vorrichtung nach einem der vorhergehenden Ansprüche, **gekennzeichnet durch** das Vorhandensein eines leitenden Materials entlang von zueinander parallelen Linien, die die beiden Flächen, die die Leitmotive umfassen, verbinden.

10. Vorrichtung nach einem der vorhergehenden Ansprüche, **gekennzeichnet durch** die Verwendung von Leitmotiven, die durch Metallisierung der Kontaktflächen erhalten werden.

11. Vorrichtung nach einem der vorhergehenden Ansprüche mit Ausnahme des Anspruchs 10, **gekennzeichnet durch** die Verwendung von leitenden Polymeren, die in die beiden Kontaktstücke eingeschlossen sind.
